# EUROPEAN PATENT SPECIFICATION

(11) **EP 4 155 945 B1**
(45) Date of publication and mention of the grant of the patent: **26.03.2025**
(21) Application number: 20940633.9
(22) Date of filing: 15.06.2020
(51) Int. Cl.: G06F 12/02, G06F 3/06

(54) **SYNCHRONIZATION METHOD, APPARATUS AND SYSTEM FOR LOGICAL BLOCK ADDRESS TO PHYSICAL PAGE NUMBER MAPPING TABLE**
SYNCHRONISATIONSVERFAHREN, VORRICHTUNG UND SYSTEM FÜR LOGISCHE BLOCKADRESSE IN PHYSIKALISCHE SEITENNUMMERNABBILDUNGSTABELLE
PROCÉDÉ, APPAREIL ET SYSTÈME DE SYNCHRONISATION D'UNE ADRESSE DE BLOC LOGIQUE À UNE TABLE DE MAPPAGE DE NUMÉROS DE PAGES PHYSIQUES

(43) Date of publication of application: 29.03.2023
(73) Proprietor: Huawei Technologies Co., Ltd., Longgang District, Shenzhen, Guangdong 518129 (CN)
(72) Inventor: QIU, Laibin, Shenzhen, Guangdong 518129 (CN); YING, Tengyun, Shenzhen, Guangdong 518129 (CN)
(74) Representative: Pfenning, Meinig & Partner mbB
(86) International application number: PCT/CN2020/096226
(87) International publication number: WO 2021/253196

(56) References cited:
- CN-A- 101 673 243
- CN-A- 103 294 605
- US-A1- 2017 192 902
- US-A1- 2017 249 257
- US-A1- 2020 042 250
- US-A1- 2020 042 439
- US-A1- 2020 065 259
- US-A1- 2020 081 645
- US-A1- 2020 133 571
- US-B1- 9 519 578

## Description

### TECHNICAL FIELD

Embodiments of this application relate to the field of communication technologies, and in particular, to a method, an apparatus, and a system for synchronizing a logical block address to physical page number mapping table.

### BACKGROUND

When a primary device and a storage device in an existing communication system store data, a physical page number corresponding to the data is unique, but a logical block address corresponding to the data may change. To read the data based on the logical block address of the data, the storage device may establish a logical block address to physical page number (L2P) mapping table that indicates a correspondence between the logical block address of the data and the physical page number of the data, and synchronize the L2P mapping table to the primary device. When reading data, the primary device determines a physical page number of the to-be-read data based on the L2P mapping table and the logical block address of the to-be-read data, includes the physical page number of the to-be-read data in a read command, and sends the read command to the storage device, so that the storage device may skip an operation of querying the L2P mapping table based on the logical block address of the to-be-read data to determine the physical page number of the to-be-read data. The storage device reads data based on the physical page number of the received to-be-read data. This can shorten a data read delay, and improve data read efficiency and user experience.

With running of the communication system, data stored in the storage device may be added, deleted, or migrated. As a result, a physical page number of the data changes. The storage device needs to update, in the L2P mapping table, an entry corresponding to the physical page number of the changed data, and include an updated entry in a response to an operation command of the primary device and send the response to the primary device, so that the primary device updates the L2P mapping table based on the received entry.

However, because the storage device passively responds to a command of the primary device, the storage device can only include the updated entry in the response to the operation command of the primary device and send the response to the primary device. As a result, after updating the entry of the L2P mapping table, the storage device cannot synchronize the updated entry to the L2P mapping table of the primary device in time. This reduces real-time performance of synchronizing the L2P mapping table. In addition, limited information may be carried in the response that is to the operation command of the primary device and that is sent by the storage device to the primary device. If there are a large quantity of to-be-updated entries, the storage device needs to wait for a plurality of operation commands sent by the primary device, and include the updated entries in responses to the plurality of operation commands of the primary device and send the responses to the primary device. This also reduces real-time performance of synchronizing the L2P mapping table.

US 2020/065259 A1 discloses that the host may check the response message including index of the updated memory mapping table received from the controller and transfer a read buffer command for reading the updated memory mapping table to the controller.

US 2017/192902 A1 discloses an operating method of a storage device that includes a nonvolatile memory device and a controller configured to control the nonvolatile memory device includes sending map data from the storage device to a host device, the map data mapping one or more of a plurality of physical addresses of the nonvolatile memory device to one or more of a plurality of logical addresses of the host device.

US 2020/133571 A1 discloses a method including receiving, at the storage device, a meta information transfer command based on a data read request. The meta information transfer command is received from a host device. The method further includes receiving, at the storage device, a data read command corresponding to the data read request and the meta information transfer command.

US 2020/042250 discloses a method where the controller notifies the host controller interface of the need to update the metadata (L2P MAP) previously stored in the host memory.

### SUMMARY

The present invention is set out in the appended set of claim. In view of this, an objective of this application is to provide a method, an apparatus, and a system for synchronizing a logical block address to physical page number mapping table, to improve an existing technical problem of low real-time performance of synchronizing the logical block address to physical page number mapping table.

### BRIEF DESCRIPTION OF DRAWINGS

FIG. 1 is a schematic diagram of a communication system according to an embodiment of this application;
FIG. 2 is a schematic diagram of a structure of a primary device and a storage device according to an embodiment of this application;
FIG. 3 is a flowchart of a method for synchronizing a logical block address to physical page number mapping table according to an embodiment of this application;
FIG. 4 is a flowchart of a method for synchronizing a logical block address to physical page number mapping table according to an embodiment of this application;
FIG. 5 is a schematic diagram of a composition of a communication apparatus according to an embodiment of this application; and
FIG. 6 is a schematic diagram of a composition of a communication apparatus according to an embodiment of this application.

### DESCRIPTION OF EMBODIMENTS

Before embodiments of this application are described, terms used in embodiments of this application are described as follows.

A logical block address (LBA) is a segment-related offset address part generated by an application program, and includes a segment base address and an intra-segment offset. A computer may segment storage space, and allocate different segments to different application programs for use. The different segments include different segment base addresses. The segment base address represents a location of a segment corresponding to the logical block address in the entire storage space, and the intra-segment offset represents a location of the logical block address in the segment.

A physical page number (P2N) is that each byte unit may be determined as a unique memory address to correctly store or read data when the data is stored in a memory in a unit of byte, that is, the physical page number. The physical page number may also be described as an actual address or an absolute address. This is not limited.

A logical block address to physical page number mapping table is a mapping table that stores a correspondence between a logical block address of data and a physical page number of data, or may be described as a mapping table from a logical block address to a physical page number (L2P). This is not limited. The physical page number corresponding to the data is unique, but the logical block address corresponding to the data may change. When the data is read based on the logical block address of the data, the physical page number of the data may be determined from the logical block address to physical page number mapping table based on the logical block address of the data, and the data is read based on the physical page number of the data. For example, the data includes data 1, data 2, and data 3, and a logical block address of the data 1 is an LBA 1, a physical page number of the data 1 is a PPN 1, a logical block address of the data 2 is an LBA 2, a physical page number of the data 2 is a PPN 2, a logical block address of the data 3 is an LBA 3, and a physical page number of the data 3 is a PPN 3. A logical block address to physical page number mapping table shown in the following Table 1 may be generated.

**Table 1**

| | | |
|---|---|---|
| Data 1 | LBA 1 | PPN 1 |
| Data 2 | LBA 2 | PPN 2 |
| Data 3 | LBA 3 | PPN 3 |

An index is a separate and physical storage structure for sorting values of one or more rows from a logical block address to physical page number mapping table, and is a set of values of one or specific rows from the logical block address to physical page number mapping table and a corresponding logical pointer list pointing to a sorting structure of a physical identifier entry in the logical block address to physical page number mapping table. The corresponding entry can be quickly obtained based on the index. Compared with entries, indexes occupy less space. The foregoing Table 1 is used as an example. An index of an entry (the data 1, LBA 1, and the PPN 1) may be determined as an index 1, an index of an entry (the data 2, the LBA 2, and the PPN 2) may be determined as an index 2, and an index of an entry (the data 3, the LBA 3, and the PPN 3) may be determined as an index 3.

The following describes implementations of this embodiment of this application in detail with reference to accompanying drawings in this specification.

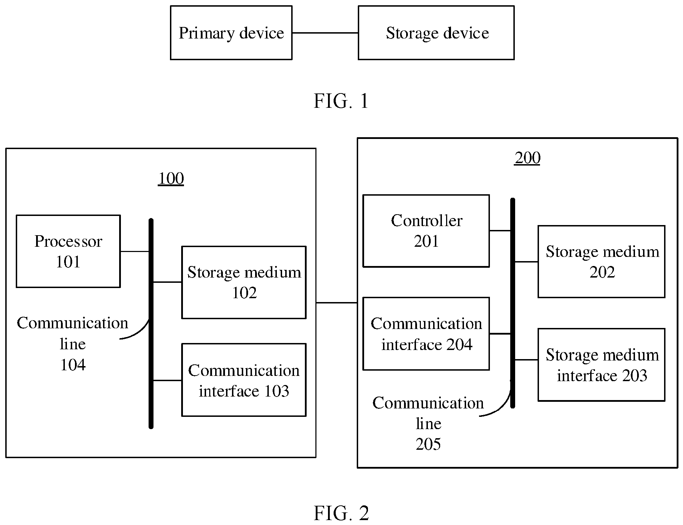

A method for synchronizing a logical block address to physical page number mapping table provided in embodiments of this application may be used to support any communication system including a primary device and a storage device. FIG. 1 is used as an example to describe a method for synchronizing a logical block address to physical page number mapping table according to an embodiment of this application.

FIG. 1 is a schematic diagram of a communication system according to an embodiment of this application. As shown in FIG. 1, the communication system may include a primary device and a storage device.

The storage device in FIG. 1 may be configured to store data, and may further generate, based on a correspondence between a logical block address of the data and a physical page number of the data, a first logical block address to physical page number mapping table locally stored in the storage device.

The primary device in FIG. 1 may synchronously generate, based on the first logical block address to physical page number mapping table, a second logical block address to physical page number mapping table locally stored in the primary device. When reading data stored in the storage device, the primary device may determine, based on the second logical block address to physical page number mapping table, a physical page number corresponding to a logical block address of the to-be-read data, include the physical page number of the data in a read command, and send the read command to the storage device, so that the storage device reads the data based on the physical page number in the read command. This avoids a delay caused by querying the logical block address to physical page number mapping table by the storage device, and improves data reading efficiency.

It should be noted that names of the devices in FIG. 1 are not limited. In addition to the names shown in FIG. 1, each device may further have another name. For example, the primary device may alternatively be named as a host. This is not limited.

In a process in which the primary device communicates with the storage device, due to some operations (for example, data migration actions such as new data writing, garbage collection (GC), and wear leveling), an entry from the first logical block address to physical page number mapping table is updated, so that the entry of the first logical block address to physical page number mapping table is newer than an entry of the second logical block address to physical page number mapping table. However, because the storage device passively responds to a command of the primary device, the storage device cannot actively modify the entry of the second logical block address to physical page number mapping table. As a result, after updating the entry of the first logical block address to physical page number mapping table, the storage device cannot synchronize the updated entry to the second logical block address to physical page number mapping table in time. This reduces real-time performance of synchronizing the logical block address to physical page number mapping table. In addition, a response sent by the storage device to the primary device may carry limited information. If there are a large quantity of to-be-updated entries, and they cannot be sent to the primary device by using one response, the storage device needs to wait for a next command. This greatly reduces real-time performance of synchronizing the logical block address to physical page number mapping table. In addition, the primary device can update its own entry by relying on only the updated entry sent by the storage device, and entry update is inflexible.

To resolve the foregoing technical problem, an embodiment of this application provides a method for synchronizing a logical block address to physical page number mapping table. The method includes: A primary device obtains a first entry index by using a storage device, where the first entry index is an index corresponding to an updated entry in a first logical block address to physical page number mapping table locally stored in the storage device; the primary device selectively determines a second entry index from the first entry index, and sends a first command to the storage device to request the storage device to send a first entry corresponding to the second entry index; and the primary device receives the first entry fed back by the storage device in response to the first command, and updates, based on the first entry, a second logical block address to physical page number mapping table locally stored in the primary device. In this embodiment of this application, the primary device may selectively determine the second entry index from the obtained first entry index, and preferentially update the second entry index. This can improve real-time performance and flexibility of synchronizing the logical block address to physical page number mapping table.

During specific implementation, as shown in FIG. 2, a communication system may include a primary device 100 and a storage device 200. The primary device 100 may be a primary device or a chip or a system on chip in a primary device. The storage device 200 may be a storage device or a chip or a system on chip in a storage device. As shown in FIG. 2, the primary device 100 may include a processor 101, a storage medium 102, a communication interface 103, and a communication line 104. The processor 101, the storage medium 102, and the communication interface 103 may be connected to each other through the communication line 104. The storage device 200 may include a controller 201, a storage medium 202, a storage medium interface 203, a communication interface 204, and a communication line 205. The controller 201, the storage medium 202, the storage medium interface 203, and the communication interface 204 may be connected to each other through the communication line 205.

The processor 101 may be configured to generate and update a second logical block address to physical page number mapping table, send a command to the storage device, to perform a read/write operation on the storage device, and may further have another processing function. For example, the processor 101 may be a central processing unit (CPU), a general-purpose processor, a network processor (NP), a digital signal processor (DSP), a microprocessor, a microcontroller, a programmable logic device (PLD), or any combination thereof. Alternatively, the processor 201 may be another apparatus having a processing function, for example, a circuit, a component, or a software module. This is not limited.

The storage medium 102 may be configured to store information such as the second logical block address to physical page number mapping table and instructions, where the instruction may be a computer program. For example, the storage medium 102 may be a dynamic storage device that can store dynamic information, such as a dynamic random access memory (DRAM), or may be a static storage device that can store static information, or the like. This is not limited.

The communication interface 103 may be configured to communicate with another device or another communication network. The another communication network may be an Ethernet, a radio access network (RAN), a wireless local area network (WLAN), or the like. The communication interface 103 may be a module, a circuit, a transceiver, or any apparatus that can implement communication.

The communication line 104 may be configured to transmit information between components included in the primary device 100.

The controller 201 may be configured to respond to a command sent by a primary device. For example, the controller 201 may be a programmable logic device (PLD), a microcontroller, or any combination thereof. The controller 201 may alternatively be another apparatus having a control function, for example, a circuit, a component, or a software module. This is not limited.

The storage medium 202 may be configured to store information such as data, a first logical block address to physical page number mapping table, and instructions, where the instruction may be a computer program. For example, the storage medium 202 may be a NAND flash memory or another storage device that may be configured to store information, or may be a compact disc storage, an optical disc storage (including a compressed optical disc, a laser disc, an optical disc, a digital versatile disc, a Blu-ray optical disc, or the like), a magnetic disk storage medium, another magnetic storage device, or the like. This is not limited.

The storage medium interface 203 may be configured to transmit information between the controller 201 and the storage medium 202.

The communication interface 204 may be configured to communicate with another device or another communication network. The another communication network may be an Ethernet, a radio access network (RAN), a wireless local area network (WLAN), or the like. The communication interface 204 may be a module, a circuit, a transceiver, or any apparatus that can implement communication.

The communication line 205 may be configured to transmit information between components included in the storage device 200.

It should be noted that the composition structure shown in FIG. 2 does not constitute a limitation on the primary device or the storage device. In addition to the components shown in FIG. 2, the primary device or the storage device may include more or fewer components than those shown in the figure, or some components may be combined, or a different component deployment may be used.

In addition, actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

With reference to the communication system shown in FIG. 1, the following describes a method for synchronizing a logical block address to physical page number mapping table provided in an embodiment of this application. The storage device may be any storage device in the communication system, and the primary device may be any primary device in the communication system that synchronizes the first logical block address to physical page number mapping table. The primary device and the storage device described in the following embodiment may have the components shown in FIG. 2.

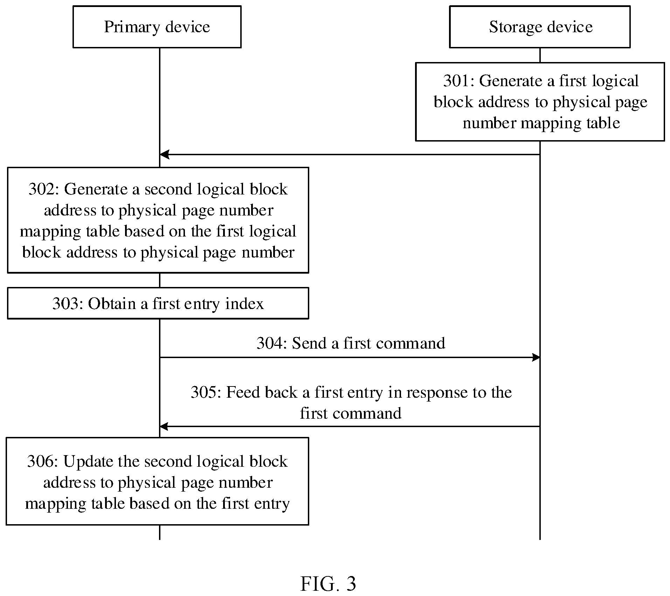

FIG. 3 is a method for synchronizing a logical block address to physical page number mapping table according to an embodiment of this application. The method can be used to improve an existing technical problem of low real-time performance of synchronizing the logical block address to physical page number mapping table. As shown in FIG. 3, the method may include the following steps.

Step 301: A storage device generates a first logical block address to physical page number mapping table.

Specifically, the storage device may generate the first logical block address to physical page number mapping table based on a logical block address (LBA) of data and a physical page number (PPN) of the data.

For example, the data includes data 1, data 2, and data 3, and a logical block address of the data 1 is an LBA 1, a physical page number of the data 1 is a PPN 1, a logical block address of the data 2 is an LBA 2, a physical page number of the data 2 is a PPN 2, a logical block address of the data 3 is an LBA 3, and a physical page number of the data 3 is a PPN 3. The storage device may generate a logical block address to physical page number mapping table shown in Table 1.

Specifically, for a specific description of the first logical block address to physical page number mapping table generated by the storage device, refer to the foregoing description of the logical block address to physical page number mapping table. Details are not described again.

Step 302: A primary device obtains the first logical block address to physical page number mapping table, and generates a second logical block address to physical page number mapping table based on the first logical block address to physical page number mapping table.

The second logical block address to physical page number mapping table may include a part or all of entries in the first logical block address to physical page number mapping table.

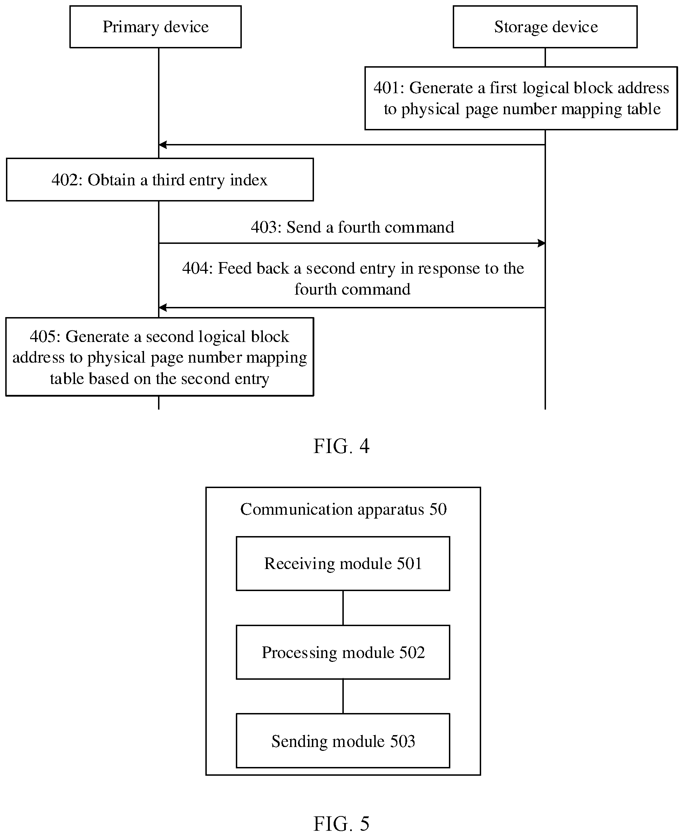

For example, the primary device may send, to the storage device by using the method shown in FIG. 4, a fifth command that indicates the storage device to feed back a third entry index, and receive the third entry index that is fed back by the storage device in response to the fifth command. The third entry index is indexes of all entries in the first logical block address to physical page number mapping table. The primary device may selectively determine a fourth entry index from the third entry index, send, to the storage device, a fourth command that requests the storage device to send a second entry corresponding to the fourth entry index, and generate the second logical block address to physical page number mapping table based on the second entry fed back by the storage device in response to the fourth command.

For example, the first logical block address to physical page number mapping table is the foregoing Table 1, and the primary device may generate, based on Table 1, the second logical block address to physical page number mapping table shown in the following Table 2.

**Table 2**

| | | |
|---|---|---|
| Data 1 | LBA 1 | PPN 1 |
| Data 2 | LBA 2 | PPN 2 |
| Data 3 | LBA 3 | PPN 3 |

It should be noted that in this embodiment of this application, the first logical block address to physical page number mapping table may alternatively be described as a logical block address to physical page number mapping table generated by the storage device, and the second logical block address to physical page number mapping table may alternatively be described as a logical block address to physical page number mapping table generated by the primary device.

Step 303: The primary device obtains a first entry index by using the storage device.

The first entry index is an index of an updated entry in the first logical block address to physical page number mapping table.

Specifically, the primary device may send a second command to the storage device, and the storage device feeds back the first entry index to the primary device in response to the second command. The second command may indicate the storage device to feed back the first entry index.

In a possible design, the primary device periodically sends the second command to the storage device.

In a running process, the primary device may periodically (for example, 10s or 20s, which is not limited) send the second command to the storage device, to obtain the index of the entry updated by the storage device in time.

In still another possible design, the primary device sends the second command to the storage device based on first information received from the storage device.

The first information may indicate that there is an updated entry in the first logical block address to physical page number mapping table. The first information may be carried in feedback of the storage device in response to a third command sent by the primary device. The third command may be a command such as a read command or a write command for performing a read/write operation on the storage device.

For example, if the primary device needs to read data, the primary device may determine a physical page number of the data based on the second logical block address to physical page number mapping table and a logical block address of the data, and include the physical page number of the data in a read command and send the read command to the storage device. After receiving the read command, the storage device may query the data based on the physical page number in the read command, and include the data in feedback in response to the read command and send the feedback to the primary device. If an entry in the first logical block address to physical page number mapping table is updated before the storage device receives the read command is received, the storage device may further include the first information in the feedback in response to the read command, so that the primary device determines, based on the first information, that the entry in the first logical block address to physical page number mapping table is updated, and then sends the second command to the storage device.

Example 1: An explicit indication manner may indicate that there is an updated entry in the first logical block address to physical page number mapping table. For example, the first information may carry an identifier indicating whether there is an updated entry in the first logical block address to physical page number mapping table. The identifier may be a binary bit value 0 or 1. When the identifier is 1, it indicates that there is an updated entry in the first logical block address to physical page number mapping table. When the identifier is 0, it indicates that there is no updated entry in the first logical block address to physical page number mapping table. When receiving the feedback of the storage device in response to the third command, the primary device may parse the first information in the feedback, and determine, based on the identifier, whether there is an updated entry in the first logical block address to physical page number mapping table. If it is determined, based on the identifier, that there is an updated entry in the first logical block address to physical page number mapping table, the primary device may be triggered to send the second command to the storage device, to obtain an index of the updated entry of the storage device in time, and determine, based on the index, the updated entry in the first logical block address to physical page number mapping table.

Example 2: An implicit indication manner may indicate that there is an updated entry in the first logical block address to physical page number mapping table. For example, whether there is an updated entry in the first logical block address to physical page number mapping table may be determined by using a format of feedback that carries the first information and that is of the storage device in response to the third command. In this example, there is a mapping relationship between the format of the feedback that is of the storage device in response to the third command and whether there is an updated entry in the first logical block address to physical page number mapping table. For example, when feedback of the storage device in response to the third command is in a format 1, it indicates that there is an updated entry in the first logical block address to physical page number mapping table; when feedback of the storage device in response to the third command is in a format 2, it indicates that there is no updated entry in the first logical block address to physical page number mapping table. When receiving the feedback of the storage device in response to the third command, the primary device may determine, based on a format of the feedback, whether there is an updated entry in the first logical block address to physical page number mapping table. If it is determined, based on the format of the feedback, that there is an updated entry in the first logical block address to physical page number mapping table, the primary device may be triggered to send the second command to the storage device, to obtain an index of the updated entry of the storage device in time, and determine, based on the index, the updated entry in the first logical block address to physical page number mapping table.

Further, in Example 1 and Example 2, when there is an updated entry in the first logical block address to physical page number mapping table, the first information may further carry indication information or a quantity of updated entries in the first logical block address to physical page number mapping table. The indication information indicates that the quantity of updated entries in the first logical block address to physical page number mapping table is greater than a first threshold. In this case, the primary device may determine, based on the first information, whether the quantity of updated entries in the first logical block address to physical page number mapping table is greater than the preset first threshold. When the primary device determines that the quantity of updated entries in the first logical block address to physical page number mapping table is greater than the preset first threshold, the primary device is triggered to send the second command to the storage device. That is, the second command is sent only when the quantity of updated entries in the first logical block address to physical page number mapping table is large. In this way, the primary device does not frequently send the second command to the storage device based on the first information.

For example, the storage device may determine whether the quantity of updated entries in the first logical block address to physical page number mapping table is greater than the preset first threshold. If the quantity is greater than the first threshold, the storage device generates indication information, and after subsequently receiving the third command sent by the primary device, includes the indication information in the feedback of the storage device in response to the third command, and sends the feedback to the primary device. The primary device sends the second command to the storage device based on the received indication information.

For another example, after determining that there is an updated entry in the first logical block address to physical page number mapping table, the storage device may determine a quantity of updated entries in the first logical block address to physical page number mapping table, and after subsequently receiving the third command sent by the primary device, include the quantity of updated entries in the first logical block address to physical page number mapping table in first information, and send the first information to the primary device by using feedback of the storage device in response to the third command. The primary device determines, based on the quantity of updated entries in the first logical block address to physical page number mapping table in the first information, whether the quantity is greater than a preset first threshold. If the quantity is greater than the preset first threshold, the primary device sends the second command to the storage device.

It should be noted that, in an actual running process, the first threshold may be preset, or the first threshold may be dynamically adjusted synchronously based on an actual running status of the primary device and/or the storage device. This is not limited.

Further, after sending the second command to the storage device, the primary device may receive the first entry index fed back by the storage device in response to the second command.

Specifically, an index is in a one-to-one correspondence with an entry. Compared with the entry, the index may occupy smaller space. The feedback of the storage device in response to the second command may carry an index corresponding to a more complete updated entry. The primary device may more completely determine, by using the more complete index carried in the feedback of the storage device in response to the second command, the updated entry in the first logical block address to physical page number mapping table.

Specifically, after receiving the second command sent by the primary device, the storage device may determine an index of the updated entry in the first logical block address to physical page number mapping table as the first entry index, and include the first entry index in the feedback of the storage device in response to the second command and send the feedback to the primary device.

For example, the first logical block address to physical page number mapping table is Table 1. It is assumed that an index of an entry (data 1, an LBA 1, and a PPN 1) is an index 1, an index of an entry (data 2, an LBA 2, and a PPN 2) is an index 2, and an index of an entry (data 3, an LBA 3, and a PPN 3) is an index 3. If the entry (the data 1, the LBA 1, and the PPN 1) and the entry (the data 3, the LBA 3, and the PPN 3) in the storage device are updated, the storage device may determine the index 1 and the index 3 as the first entry index, and include the index 1 and the index 3 in the feedback of the storage device in response to the second command and send the feedback to the primary device.

Further, after receiving the second command, the storage device may preferentially respond to the second command, to improve real-time performance of synchronizing the logical block address to physical page number mapping table.

Specifically, a priority of the second command may be set to be the highest, and when receiving the second command and another command, the storage device preferentially responds to the second command.

Step 304: The primary device sends a first command to the storage device. Correspondingly, the storage device receives the first command.

The primary device may selectively determine a second entry index from the first entry index, and send the first command to the storage device to request the storage device to send a first entry corresponding to the second entry index. The second entry index may be a part or all of indexes in the first entry index.

In an implementation the second entry index entry is a part of indexes in the first entry index is used. The primary device may select a part of indexes from the first entry index as the second entry index, and include the second entry index in the first command and send the first command to the storage device. In this way, the primary device may preferentially update the entry corresponding to the second entry index, and then update entries corresponding to the remaining indexes. This can improve flexibility and real-time performance of synchronizing the logical block address to physical page number mapping table.

Specifically, the primary device may determine the second entry index based on importance of data in an entry corresponding to each index in the first entry index.

Example 1: The primary device may determine the second entry index based on a quantity of access times of the data in the entry corresponding to each index in the first entry index. Specifically, the primary device may record the quantity of access times of the data corresponding to each entry in the logical block address to physical page number mapping table, and determine, as the second entry index, an index corresponding to an entry in which data whose quantity of access times is greater than a second threshold is located.

For example, the first entry index includes an index 1, an index 2, an index 3, and an index 4, and a quantity of access times of data corresponding to the index 1 is 50, a quantity of access times of data corresponding to the index 2 is 80, a quantity of access times of data corresponding to the index 3 is 100, and a quantity of access times of data corresponding to the index 4 is 15. It is assumed that the second threshold is 40, the primary device may use the index 1, the index 2, and the index 3 as the second entry index.

Example 2: The primary device may determine the second entry index based on a data type of the data in the entry corresponding to each index in the first entry index.

Specifically, the primary device may determine the data type of the data based on a file name extension corresponding to the data, and determine the second entry index based on the data type.

For example, the first entry index includes an index 1, an index 2, an index 3, and an index 4, file name extensions of data corresponding to the index 1 and the index 2 are both word, a file name extension of data corresponding to the index 3 is .pdf, and a file name extension of data corresponding to the index 4 is .excel. It is assumed that the primary device is preset to preferentially update indexes corresponding to entries in which data with file name extensions .word and .excel are located, in this case, the primary device may use the index 1, the index 2, and the index 4 as the second entry index.

Alternatively, the primary device may divide at least one range based on a logical block address of the data, determine the data type of the data based on the range to which the logical block address of the data belongs, and determine the second entry index based on the data type.

For example, ranges divided by the primary device based on logical block addresses of data include a range 1, a range 2, and a range 3, the first entry index includes an index 1, an index 2, an index 3, and an index 4, logical block addresses of data corresponding to the index 1 and the index 2 are both located in the range 1, and logical block addresses of data corresponding to the index 3 and the index 4 are both located in the range 3. It is assumed that the primary device is preset to preferentially update indexes corresponding to the data corresponding to the logical block addresses of the range 1 and the range 2. In this case, the primary device may use the index 1 and the index 2 as the second entry index.

Alternatively, the primary device may determine the data type of the data based on whether the data is user data, and determine the second entry index based on the data type.

For example, the first entry index includes an index 1, an index 2, an index 3, and an index 4, data corresponding to the index 1, the index 2, and the index 3 is user data, and data corresponding to the index 4 is original data of the primary device. It is assumed that the primary device is preset to preferentially update the user data, the primary device may use the index 1, the index 2, and the index 3 as the second entry index.

It should be noted that, in a running process, the primary device may determine, based on an actual running status, to preferentially update an index corresponding to an entry in which data of a specific data type is located. This is not limited.

Specifically, the primary device may further determine the second entry index based on coldness/hotness of data in an entry corresponding to each index in the first entry index.

For example, the primary device may determine the coldness/hotness of the data based on an access frequency of the data in the entry corresponding to each index in the first entry index. For example, data whose access frequency is higher than a preset threshold may be determined as hot data, data whose access frequency is lower than the preset threshold may be determined as cold data, and an index corresponding to an entry in which the hot data is located in the first entry index is preferentially determined as the second entry index.

In a possible design, the primary device sends a first command to the storage device, includes the second entry index in the first command, and sends the first command to the storage device.

In still another possible design, the primary device sends a plurality of first commands to the storage device, includes the second entry index in the plurality of first commands, and sends the plurality of first commands to the storage device. Each first command includes a part of indexes of the second entry index.

Specifically, the primary device may determine a quantity of synchronized entries based on a quantity of indexes in the second entry index, and determine, based on the quantity of synchronized entries, the quantity of indexes in the second entry index carried in each first command. The quantity of synchronized entries indicates the quantity of indexes in the second entry index that is carried in the first command sent by the primary device to the storage device.

For example, the primary device may divide a plurality of indexes in the second entry index into at least one index group based on the quantity of synchronized entries, and send, to the storage device, at least one first command that carries the index group. Different first commands carry different index groups.

For example, a quantity of indexes in the second entry index includes 20. It is assumed that the primary device and the storage device cannot synchronize entries corresponding to the 20 indexes in one synchronization process. The primary device may divide the 20 indexes into four groups, where one group includes an index 1 to an index 5, one group includes an index 6 to an index 10, one group includes an index 11 to an index 15, and another group includes an index 16 to an index 20. When sending the first command to the storage device, the primary device may send four first commands to the storage device, a first command 1 carries the index 1 to the index 5, a first command 2 carries the index 6 to the index 10, a first command 3 carries the index 11 to the index 15, and a first command 4 carries the index 16 to the index 20. In this way, the storage device may include entries corresponding to the index 1 to the index 5 in feedback on the first command 1, and send the feedback to the primary device; include entries corresponding to the index 6 to the index 10 in feedback on the first command 2, and send the feedback to the primary device; include entries corresponding to the index 11 to the index 15 in feedback on the first command 3, and send the feedback to the primary device; and include entries corresponding to the index 16 to the index 20 in feedback on the first command 4, and send the feedback to the primary device.

It should be noted that the foregoing quantity of synchronized entries may also be described as an entry synchronization granularity, and the entry synchronization granularity is a maximum space that can be occupied by an entry in a synchronization process. For example, the entry synchronization granularity may be 2 KB, 4 KB, 8 KB, 16 KB, or the like. This is not limited.

Step 305: The storage device feeds back a first entry to the primary device in response to the first command. Correspondingly, the primary device receives the first entry fed back by the storage device in response to the first command.

Specifically, after receiving the first command, the storage device determines, based on the second entry index in the first command, the first entry corresponding to the second entry index, includes the first entry in feedback of the storage device in response to the first command, and sends the feedback to the primary device.

Step 306: The primary device updates the second logical block address to physical page number mapping table based on the first entry.

Specifically, after receiving the feedback of the storage device in response to the first command, the primary device updates the second logical block address to physical page number mapping table based on the first entry carried in the feedback.

Based on the method shown in FIG. 3, in this embodiment of this application, the primary device may selectively determine the second entry index from the obtained first entry index, and preferentially update the second entry index. This can improve real-time performance and flexibility of synchronizing the logical block address to physical page number mapping table.

FIG. 3 describes a specific process in which the primary device synchronously updates the second logical block address to physical page number mapping table after the first logical block address to physical page number mapping table is updated in a case in which the primary device has synchronously generated the second logical block address to physical page number mapping table based on the first logical block address to physical page number mapping table. Refer to FIG. 4, the following describes a specific process in which the primary device synchronously generates the second logical block address to physical page number mapping table based on the first logical block address to physical page number mapping table.

FIG. 4 is a method for synchronizing a logical block address to physical page number mapping table according to an embodiment of this application. As shown in FIG. 4, the method may include the following steps.

Step 401: A storage device generates a first logical block address to physical page number mapping table.

Specifically, for a description of step 401, refer to step 301. Details are not described again.

Step 402: The primary device obtains a third entry index by using the storage device.

The third entry index is indexes of all entries in the first logical block address to physical page number mapping table.

Specifically, the primary device may send a fifth command to the storage device. After receiving the fifth command, the storage device may use indexes of all entries in the logical block address to physical page number mapping table generated by the storage device as the third entry index, include the third entry index in feedback of the storage device in response to the fifth command, and send the feedback to the primary device. The fifth command indicates the storage device to feed back the third entry index.

For example, the primary device may send the fifth command to the storage device in an initial power-on phase, and obtain the indexes of all the entries in the first logical block address to physical page number mapping table.

Step 403: The primary device sends a fourth command to the storage device. Correspondingly, the storage device receives the fourth command.

The primary device may selectively determine a fourth entry index from the third entry index, and send the fourth command to the storage device to request the storage device to send a second entry corresponding to the fourth entry index.

Specifically, a process in which the primary device determines the fourth entry index based on the third entry index is similar to the process in which the primary device determines the second entry index based on the first entry index in step 305. Details are not described again.

The primary device sends the fourth entry index to the storage device, so that the primary device may preferentially synchronize a part of entries in the first logical block address to physical page number mapping table, and then synchronize another entry in the first logical block address to physical page number mapping table. This improves flexibility and real-time performance of synchronizing the logical block address to physical page number mapping table.

Step 404: The storage device feeds back the second entry to the primary device in response to the fourth command.

The second entry is an entry corresponding to the fourth entry index.

Step 405: The primary device generates a second logical block address to physical page number mapping table based on the second entry.

Specifically, for specific descriptions of step 404 and step 405, refer to step 305 and step 306. Details are not described again.

Based on the method shown in FIG. 4, the primary device may determine the fourth entry index based on the obtained third entry index, and preferentially generate the second logical block address to physical page number mapping table based on the fourth entry index. This can improve flexibility of generating the logical block address to physical page number mapping table by the primary device.

The foregoing mainly describes the solutions provided in embodiments of this application from a perspective of interaction between the main storage devices. It may be understood that to implement the foregoing functions, the devices include hardware structures and/or software modules corresponding to the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network elements may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 5 shows a communication apparatus. The communication apparatus 50 may be a primary device, or a chip or a system on chip in a primary device. The communication apparatus 50 may be configured to perform a function of the primary device in the foregoing embodiment. The communication apparatus 50 shown in FIG. 5 includes a receiving module 501, a processing module 502, and a sending module 503.

The receiving module 501 is configured to obtain a first entry index from a storage device. The first entry index is an index corresponding to an updated entry in a first logical block address to physical page number mapping table locally stored in the storage device.

The processing module 502 is configured to selectively determine a second entry index from the first entry index.

The sending module 503 is configured to send a first command to the storage device to request the storage device to send a first entry corresponding to the second entry index.

The receiving module 501 is further configured to receive the first entry fed back by the storage device in response to the first command.

The processing module 502 is further configured to update, based on the first entry, a second logical block address to physical page number mapping table locally stored in a primary device.

For a specific implementation of the communication apparatus 50, refer to a behavior function of the primary device in the method for synchronizing the logical block address to physical page number mapping table in FIG. 3 and FIG. 4.

In a possible design, the sending module 503 is further configured to send, to the storage device, a second command that indicates the storage device to feed back the first entry index; and the receiving module 501 is further configured to receive the first entry index that is fed back by the storage device in response to the second command.

In a possible design, the sending module 503 is further configured to periodically send the second command to the storage device.

In a possible design, the receiving module 501 is further configured to receive, from the storage device, first information indicating that there is an update in the first logical block address to physical page number mapping table, and the sending module 503 is further configured to send the second command to the storage device.

In a possible design, the receiving module 501 is further configured to receive, from the storage device, first information that carries indication information. The indication information indicates that a quantity of updated entries in the first logical block address to physical page number mapping table is greater than a preset first threshold. The sending module 503 is further configured to send the second command to the storage device.

In a possible design, the receiving module 501 is further configured to receive, from the storage device, first information that carries a quantity of updated entries in the first logical block address to physical page number mapping table. The sending module 503 is further configured to send the second command to the storage device when the primary device determines that the quantity of updated entries in the first logical block address to physical page number mapping table is greater than a preset first threshold.

In a possible design, the receiving module 501 is further configured to receive the first information carried in information fed back by the storage device in response to a third command. The third command is used for performing a read/write operation on the storage device.

In a possible design, the processing module 502 is further configured to determine the second entry index based on importance of data in an entry corresponding to each index in the first entry index.

In a possible design, the processing module 502 is further configured to determine the second entry index based on a quantity of access times of the data in the entry corresponding to each index in the first entry index.

In a possible design, the processing module 502 is further configured to determine, as the second entry index, an index corresponding to an entry in which data whose quantity of access times is greater than a second threshold is located.

In a possible design, the processing module 502 is further configured to determine the second entry index based on a data type of the data in the entry corresponding to each index in the first entry index.

In a possible design, the processing module 502 is further configured to determine the data type of the data based on a file name extension corresponding to the data. Alternatively, the processing module 502 is further configured to determine the data type of the data based on a range to which a logical block address of the data belongs. Alternatively, the processing module 502 is further configured to determine the data type of the data based on whether the data is user data.

In a possible design, the processing module 502 is further configured to determine the second entry index based on coldness/hotness of data in an entry corresponding to each index in the first entry index.

In a possible design, the processing module 502 is further configured to determine, based on a quantity of indexes in the second entry index, a quantity of synchronized entries indicating the quantity of indexes in the second entry index that is carried in the first command sent by the primary device to the storage device. The processing module 502 is further configured to divide a plurality of indexes in the second entry index into at least one index group based on the quantity of synchronized entries. The sending module 503 is further configured to send, to the storage device, at least one first command that carries the index group. Different first commands carry different index groups.

In a possible design, the receiving module 501 is further configured to obtain a third entry index by using the storage device. The third entry index is indexes of all entries in the first logical block address to physical page number mapping table. The processing module 502 is further configured to selectively determine a fourth entry index from the third entry index. The sending module 503 is further configured to send a fourth command to the storage device to request the storage device to send a second entry corresponding to the fourth entry index. The processing module 502 is further configured to generate the second logical block address to physical page number mapping table based on the second entry fed back by the storage device in response to the fourth command.

In still another possible implementation, the receiving module 501 and the sending module 503 in FIG. 5 may be replaced with a communication interface, the processing module 502 may be replaced with a processor, functions of the receiving module 501 and the sending module 503 may be integrated into the communication interface, and functions of the processing module 502 may be integrated into the processor. Further, the communication apparatus 50 shown in FIG. 5 may further include a storage medium. When the receiving module 501 and the sending module 503 are replaced with a communication interface, and the processing module 502 is replaced with a processor, the communication apparatus 50 in this embodiment of this application may be the primary device 100 shown in FIG. 2.

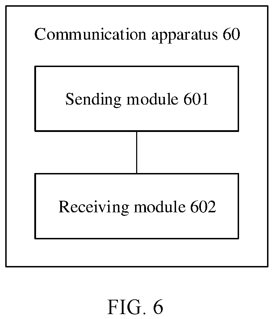

When each functional module is obtained through division based on each corresponding function, FIG. 6 shows a communication apparatus. The communication apparatus 60 may be a storage device, or a chip or a system on chip in a storage device. The communication apparatus 60 may be configured to perform a function of the storage device in the foregoing embodiment. The communication apparatus 60 shown in FIG. 6 includes a sending module 601 and a receiving module 602.

The sending module 601 is configured to send a first entry index to a primary device. The first entry index is an index corresponding to an updated entry in a first logical block address to physical page number mapping table locally stored in the storage device.

The receiving module 602 is configured to receive a first command that is from the primary device and that requests the storage device to send a first entry corresponding to a second entry index selectively determined by the primary device from the first entry index.

The sending module 601 is further configured to feed back the first entry to the primary device in response to the first command, so that the primary device updates, based on the first entry, a second logical block address to physical page number mapping table locally stored in the primary device.

For a specific implementation of the communication apparatus 60, refer to a behavior function of the storage device in the method for synchronizing the logical block address to physical page number mapping table in FIG. 3 and FIG. 4.

In a possible design, the receiving module 602 is further configured to receive, from the primary device, a second command that indicates the storage device to feed back the first entry index; and the sending module 601 is further configured to feed back the first entry index to the storage device in response to the second command.

In a possible design, the sending module 601 is further configured to send, to the primary device, first information indicating that there is an update in the first logical block address to physical page number mapping table.

In a possible design, the sending module 601 is further configured to send, to the primary device, first information that carries indication information. The indication information indicates that a quantity of updated entries in the first logical block address to physical page number mapping table is greater than a first threshold.

In a possible design, the sending module 601 is further configured to send, to the primary device, first information that carries a quantity of updated entries in the first logical block address to physical page number mapping table.

In a possible design, the receiving module 602 is further configured to receive a third command that is from the primary device and that is used for performing a read/write operation on the storage device. The sending module 601 is further configured to include the first information in information fed back in response to the third command, and sends the information to the primary device.

In a possible design, the communication apparatus further includes a processing module 603. The processing module 603 is configured to: after receiving the second command, preferentially responds to the second command. The second command has a highest priority.

In a possible design, the sending module 601 is further configured to send a third entry index to the primary device. The third entry index is indexes corresponding to all entries in the first logical block address to physical page number mapping table. The receiving module 602 is further configured to receive a fourth command that is from the primary device and that requests the storage device to send a second entry corresponding to a fourth entry index selectively determined by the primary device from the third entry index. The sending module 601 is further configured to feed back the second entry to the primary device in response to the fourth command, so that the primary device generates the second logical block address to physical page number mapping table based on the second entry.

In still another possible implementation, the sending module 601 and the receiving module 602 in FIG. 6 may be replaced with a communication interface, and the processing module 603 may be replaced with a controller. Functions of the sending module 601 and the receiving module 602 may be integrated into the communication interface, and functions of the processing module 603 may be integrated into the controller. Further, the communication apparatus 60 shown in FIG. 6 may further include a storage medium. When the sending module 601 and the receiving module 602 are replaced with a communication interface, and the processing module 603 is replaced with a controller, the communication apparatus 60 in this embodiment of this application may be the storage device 200 shown in FIG. 2.

Embodiments of this application further provide a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal (including a data transmit end and/or a data receive end) in any one of the foregoing embodiments, for example, a hard disk drive or a memory of the terminal. Alternatively, the computer-readable storage medium may be an external storage device of the terminal, for example, a plug-in hard disk, a smart media card (SMC), a secure digital (SD) card, a flash card, or the like that are configured on the terminal. Further, the computer-readable storage medium may alternatively include both of the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

Based on the foregoing descriptions of the implementations, a person skilled in the art may clearly understand that for the purpose of convenient and brief description, division into the foregoing functional modules is merely used as an example for descriptions. During actual application, the foregoing functions can be allocated to different modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, the division into modules or units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A method for synchronizing a logical block address to physical page number mapping table, comprising:
obtaining (303), by a primary device, a first entry index from a storage device, wherein the first entry index is an index corresponding to an updated entry in a first logical block address to physical page number mapping table locally stored in the storage device;
selectively determining, by the primary device, a second entry index from the first entry index, wherein the second entry index is a part of indexes in the first entry index, and sending (304) a first command to the storage device to request the storage device to send a first entry corresponding to the second entry index;
receiving (305), by the primary device, the first entry fed back by the storage device in response to the first command; and
updating (306), by the primary device based on the first entry, a second logical block address to physical page number mapping table locally stored in the primary device;
wherein the obtaining, by the primary device, the first entry index comprises:
sending, by the primary device, a second command to the storage device, wherein the second command indicates the storage device to feed back the first entry index; and
receiving, by the primary device, the first entry index fed back by the storage device in response to the second command;
wherein the selectively determining, by the primary device, the second entry index from the first entry index comprises:
determining, by the primary device, the second entry index based on importance of data in an entry corresponding to each index in the first entry index;
wherein the determining, by the primary device, the second entry index based on importance of data in an entry corresponding to each index in the first entry index comprises:
determining, by the primary device, the second entry index based on a quantity of access times of the data in the entry corresponding to each index in the first entry index.

2. The method according to claim 1, wherein the sending, by the primary device, the second command to the storage device comprises:
periodically sending, by the primary device, the second command to the storage device.

3. The method according to claim 1, wherein the sending, by the primary device, the second command to the storage device comprises:
receiving, by the primary device, first information from the storage device, wherein the first information indicates that there is an entry update in the first logical block address to physical page number mapping table, and sending, by the primary device, the second command to the storage device.

4. The method according to claim 1, wherein the sending, by the primary device, the second command to the storage device comprises:
receiving, by the primary device, first information from the storage device, wherein the first information carries indication information, and the indication information indicates that a quantity of updated entries in the first logical block address to physical page number mapping table is greater than a preset first threshold; and sending, by the primary device, the second command to the storage device.

5. The method according to claim 1, wherein the sending, by the primary device, the second command to the storage device comprises:
receiving, by the primary device, first information from the storage device, wherein the first information carries a quantity of updated entries in the first logical block address to physical page number mapping table; and
sending, by the primary device, the second command to the storage device when the primary device determines that the quantity of updated entries in the first logical block address to physical page number mapping table is greater than a preset first threshold.

6. The method according to any one of claims 3 to 5, wherein the receiving, by the primary device, the first information from the storage device comprises:
receiving, by the primary device, the first information carried in information fed back by the storage device in response to a third command, wherein the third command is used for performing a read/write operation on the storage device.

7. A method for synchronizing a logical block address to physical page number mapping table, comprising:
sending, by a storage device, a first entry index to a primary device, wherein the first entry index is an index corresponding to an updated entry in a first logical block address to physical page number mapping table locally stored in the storage device;
wherein
the sending, by the storage device, the first entry index to the primary device comprises:
receiving, by the storage device, a second command from the primary device, wherein the second command indicates the storage device to feed back the first entry index; and
feeding back, by the storage device, the first entry index to the storage device in response to the second command;
and the method further comprising:
receiving (304), by the storage device, a first command from the primary device, wherein the first command requests the storage device to send a first entry corresponding to a second entry index selectively determined by the primary device from the first entry index based on a quantity of access times of the data in the entry corresponding to each index in the first entry index, wherein the second entry index is a part of indexes in the first entry index; and
feeding back (305), by the storage device, the first entry to the primary device in response to the first command, so that the primary device updates, based on the first entry, a second logical block address to physical page number mapping table locally stored in the primary device.

8. The method according to claim 7, wherein the method further comprises:
sending, by the storage device, first information to the primary device, wherein the first information indicates that there is an update in the first logical block address to physical page number mapping table.

9. The method according to claim 7, wherein the method further comprises:
sending, by the storage device, first information to the primary device, wherein the first information carries indication information, and the indication information indicates that a quantity of updated entries in the first logical block address to physical page number mapping table is greater than a first threshold.

10. The method according to claim 7, wherein the method further comprises:
sending, by the storage device, first information to the primary device, wherein the first information carries a quantity of updated entries in the first logical block address to physical page number mapping table.

11. A communication system, wherein the communication system comprises a primary device and a storage device;
the primary device is configured to perform the method according to any one of claims 1 to 6; and
the storage device is configured to perform the method according to any one of claims 7 to 10.

## Patentansprüche

1. Verfahren zum Synchronisieren einer "logische Blockadresse zu physischer Seitennummer"-Mappingtabelle, das Folgendes umfasst:
Erhalten (303) eines ersten Eintragsindizes von einer Speichervorrichtung durch eine primäre Vorrichtung, wobei der erste Eintragsindex ein Index ist, der einem aktualisierten Eintrag in einer ersten "logische Blockadresse zu physischer Seitennummer"-Mappingtabelle entspricht, die lokal in der Speichervorrichtung gespeichert ist;
selektives Bestimmen eines zweiten Eintragsindizes aus dem ersten Eintragsindex durch die primäre Vorrichtung, wobei der zweite Eintragsindex ein Teil von Indizes in dem ersten Eintragsindex ist, und Senden (304) eines ersten Befehls an die Speichervorrichtung, um die Speichervorrichtung aufzufordern, einen ersten Eintrag zu senden, der dem zweiten Eintragsindex entspricht;
Empfangen (305) des ersten Eintrags, der von der Speichervorrichtung als Reaktion auf den ersten Befehl zurückgeführt wird, durch die primäre Vorrichtung; und
Aktualisieren (306), durch die primäre Vorrichtung basierend auf dem ersten Eintrag, einer zweiten "logische Blockadresse zu physischer Seitennummer"-Mappingtabelle, die lokal in der primären Vorrichtung gespeichert ist;
wobei das Erhalten des ersten Eintragsindizes durch die primäre-Vorrichtung Folgendes umfasst:
Senden eines zweiten Befehls durch die primäre Vorrichtung an die Speichervorrichtung, wobei der zweite Befehl angibt, dass die Speichervorrichtung den ersten Eintragsindex zurückführen soll; und
Empfangen des ersten Eintragsindizes, der von der Speichervorrichtung als Reaktion auf den zweiten Befehl zurückgeführt wird, durch die primäre Vorrichtung;
wobei das selektive Bestimmen des zweiten Eintragsindizes aus dem ersten Eintragsindex durch die primäre Vorrichtung Folgendes umfasst:
Bestimmen des zweiten Eintragsindizes durch die primäre Vorrichtung, basierend auf der Wichtigkeit von Daten in einem Eintrag, der jedem Index im ersten Eintragsindex entspricht;
wobei das Bestimmen des zweiten Eintragsindizes durch die primäre Vorrichtung, basierend auf der Wichtigkeit von Daten in einem Eintrag, der jedem Index in dem ersten Eintragsindex entspricht, Folgendes umfasst:
Bestimmen des zweiten Eintragsindizes durch die primäre Vorrichtung, basierend auf einer Anzahl von Zugriffszeiten der Daten in dem Eintrag, der jedem Index in dem ersten Eintragsindex entspricht.

2. Verfahren nach Anspruch 1, wobei das Senden des zweiten Befehls an die Speichervorrichtung durch die primäre Vorrichtung Folgendes umfasst:
periodisches Senden des zweiten Befehls an die Speichervorrichtung durch die primäre Vorrichtung.

3. Verfahren nach Anspruch 1, wobei das Senden des zweiten Befehls an die Speichervorrichtung durch die primäre Vorrichtung Folgendes umfasst:
Empfangen von ersten Informationen von der Speichervorrichtung durch die primäre Vorrichtung, wobei die ersten Informationen angeben, dass es eine Eintragsaktualisierung in der ersten "logische Blockadresse zu physischer Seitennummer"-Mappingtabelle gibt, und Senden des zweiten Befehls durch die primäre Vorrichtung an die Speichervorrichtung.

4. Verfahren nach Anspruch 1, wobei das Senden des zweiten Befehls an die Speichervorrichtung durch die primäre Vorrichtung Folgendes umfasst:
Empfangen von ersten Informationen von der Speichervorrichtung durch die primäre Vorrichtung, wobei die ersten Informationen Angabeinformationen tragen und die Angabeinformationen angeben, dass eine Anzahl von aktualisierten Einträgen in der ersten "logische Blockadresse zu physischer Seitennummer"-Mappingtabelle größer ist als ein voreingestellter erster Schwellenwert; und Senden des zweiten Befehls durch die primäre Vorrichtung an die Speichervorrichtung.

5. Verfahren nach Anspruch 1, wobei das Senden des zweiten Befehls an die Speichervorrichtung durch die primäre Vorrichtung Folgendes umfasst:
Empfangen von ersten Informationen von der Speichervorrichtung durch die primäre Vorrichtung, wobei die ersten Informationen eine Anzahl von aktualisierten Einträgen in der ersten "logische Blockadresse zu physischer Seitennummer"-Mappingtabelle tragen; und
Senden des zweiten Befehls durch die primäre Vorrichtung an die Speichervorrichtung, wenn die primäre Vorrichtung bestimmt, dass die Anzahl der aktualisierten Einträge in der ersten "logische Blockadresse zu physischer Seitennummer"-Mappingtabelle größer als ein voreingestellter erster Schwellenwert ist.

6. Verfahren nach einem der Ansprüche 3 bis 5, wobei das Empfangen durch die primäre Vorrichtung der ersten Informationen von der Speichervorrichtung Folgendes umfasst:
Empfangen durch die primäre Vorrichtung der ersten Informationen, die in Informationen getragen werden, die von der Speichervorrichtung als Reaktion auf einen dritten Befehl zurückgeführt werden, wobei der dritte Befehl zum Durchführen eines Lese-/Schreibvorgangs auf der Speichervorrichtung verwendet wird.

7. Verfahren zum Synchronisieren einer "logische Blockadresse zu physischer Seitennummer"-Mappingtabelle, das Folgendes umfasst:
Senden eines ersten Eintragsindizes durch eine Speichervorrichtung an eine primäre Vorrichtung, wobei der erste Eintragsindex ein Index ist, der einem aktualisierten Eintrag in einer ersten "logische Blockadresse zu physischer Seitennummer"-Mappingtabelle entspricht, die lokal in der Speichervorrichtung gespeichert ist;
wobei das Senden des ersten Eintragsindizes durch die Speichervorrichtung an die primäre Vorrichtung Folgendes umfasst:
Empfangen eines zweiten Befehls von der primären Vorrichtung durch die Speichervorrichtung, wobei der zweite Befehl angibt, dass die Speichervorrichtung den ersten Eintragsindex zurückführen soll; und
Zurückführen, durch die Speichervorrichtung, des ersten Eintragsindizes zur Speichervorrichtung als Reaktion auf den zweiten Befehl; und wobei das Verfahren ferner Folgendes umfasst:
Empfangen (304) eines ersten Befehls von der primären Vorrichtung durch die Speichervorrichtung, wobei der erste Befehl die Speichervorrichtung auffordert, einen ersten Eintrag zu senden, der einem zweiten Eintragsindex entspricht, der selektiv durch die primäre Vorrichtung aus dem ersten Eintragsindex bestimmt wird, basierend auf einer Anzahl von Zugriffszeiten der Daten in dem Eintrag, der jedem Index in dem ersten Eintragsindex entspricht, wobei der zweite Eintragsindex ein Teil von Indizes in dem ersten Eintragsindex ist; und
Zurückführen (305) durch die Speichervorrichtung des ersten Eintrags zur primären Vorrichtung als Reaktion auf den ersten Befehl, so dass die primäre Vorrichtung basierend auf dem ersten Eintrag eine zweite "logische Blockadresse zu physischer Seitennummer"-Mappingtabelle aktualisiert, die lokal in der primären Vorrichtung gespeichert ist.

8. Verfahren nach Anspruch 7, wobei das Verfahren ferner Folgendes umfasst:
Senden von ersten Informationen durch die Speichervorrichtung an die primäre Vorrichtung, wobei die ersten Informationen angeben, dass es eine Aktualisierung in der ersten "logische Blockadresse zu physischer Seitennummer"-Mappingtabelle gibt.

9. Verfahren nach Anspruch 7, wobei das Verfahren ferner Folgendes umfasst:
Senden von ersten Informationen durch die Speichervorrichtung an die primäre Vorrichtung, wobei die ersten Informationen Angabeinformationen tragen und die Angabeinformationen angeben, dass eine Anzahl aktualisierter Einträge in der ersten "logische Blockadresse zu physischer Seitennummer"-Mappingtabelle größer als ein erster Schwellenwert ist.

10. Verfahren nach Anspruch 7, wobei das Verfahren ferner Folgendes umfasst:
Senden von ersten Informationen an die primäre Vorrichtung durch die Speichervorrichtung, wobei die ersten Informationen eine Anzahl von aktualisierten Einträgen in der ersten "logische Blockadresse zu physischer Seitennummer"-Mappingtabelle tragen.

11. Kommunikationssystem, wobei das Kommunikationssystem eine primäre Vorrichtung und eine Speichervorrichtung umfasst;
die primäre Vorrichtung dazu konfiguriert ist, das Verfahren nach einem der Ansprüche 1 bis 6 durchzuführen; und
die Speichervorrichtung dazu konfiguriert ist, das Verfahren nach einem der Ansprüche 7 bis 10 durchzuführen.

## Revendications

1. Procédé de synchronisation d'une adresse de bloc logique à une table de mappage de numéros de pages physiques, comprenant :
l'obtention (303), par un dispositif primaire, d'un premier indice d'entrée à partir d'un dispositif de stockage, le premier indice d'entrée étant un indice correspondant à une entrée mise à jour dans une première adresse de bloc logique à une table de mappage de numéros de pages physiques stockée localement dans le dispositif de stockage ;
la détermination de manière sélective, par le dispositif primaire, d'un deuxième indice d'entrée à partir du premier indice d'entrée, le deuxième indice d'entrée faisant partie des indices dans le premier indice d'entrée, et l'envoi (304) d'une première commande au dispositif de stockage pour demander au dispositif de stockage d'envoyer une première entrée correspondant au deuxième indice d'entrée ;
la réception (305), par le dispositif primaire, de la première entrée réinjectée par le dispositif de stockage en réponse à la première commande ; et
la mise à jour (306), par le dispositif primaire sur la base de la première entrée, d'une deuxième adresse de bloc logique à une table de mappage de numéros de pages physiques stockée localement dans le dispositif primaire ;
l'obtention, par le dispositif primaire, du premier indice d'entrée comprenant :
l'envoi, par le dispositif primaire, d'une deuxième commande au dispositif de stockage, la deuxième commande indiquant au dispositif de stockage de réinjecter le premier indice d'entrée ; et
la réception, par le dispositif primaire, du premier indice d'entrée réinjecté par le dispositif de stockage en réponse à la deuxième commande ;
la détermination de manière sélective, par le dispositif primaire, du deuxième indice d'entrée à partir du premier indice d'entrée comprenant :
la détermination, par le dispositif primaire, du deuxième indice d'entrée sur la base de l'importance de données dans une entrée correspondant à chaque indice dans le premier indice d'entrée ;
la détermination, par le dispositif primaire, du deuxième indice d'entrée sur la base de l'importance de données dans une entrée correspondant à chaque indice dans le premier indice d'entrée comprenant :
la détermination, par le dispositif primaire, du deuxième indice d'entrée sur la base d'une quantité de temps d'accès des données dans l'entrée correspondant à chaque indice dans le premier indice d'entrée.

2. Procédé selon la revendication 1, dans lequel l'envoi, par le dispositif primaire, de la deuxième commande au dispositif de stockage comprend :
l'envoi de manière périodique, par le dispositif primaire, de la deuxième commande au dispositif de stockage.

3. Procédé selon la revendication 1, dans lequel l'envoi, par le dispositif primaire, de la deuxième commande au dispositif de stockage comprend :
la réception, par le dispositif primaire, de premières informations à partir du dispositif de stockage, les premières informations indiquant qu'il y a une mise à jour d'entrée dans la première adresse de bloc logique à une table de mappage de numéros de pages physiques, et l'envoi, par le dispositif primaire, de la deuxième commande au dispositif de stockage.

4. Procédé selon la revendication 1, dans lequel l'envoi, par le dispositif primaire, de la deuxième commande au dispositif de stockage comprend :
la réception, par le dispositif primaire, de premières informations à partir du dispositif de stockage, les premières informations transportant des informations d'indication, et les informations d'indication indiquant qu'une quantité d'entrées mises à jour dans la première adresse de bloc logique à la table de mappage de numéros de pages physiques est supérieure à un premier seuil prédéfini ; et l'envoi, par le dispositif primaire, de la deuxième commande au dispositif de stockage.

5. Procédé selon la revendication 1, dans lequel l'envoi, par le dispositif primaire, de la deuxième commande au dispositif de stockage comprend :
la réception, par le dispositif primaire, de premières informations à partir du dispositif de stockage, les premières informations transportant une quantité d'entrées mises à jour dans la première adresse de bloc logique à une table de mappage de numéros de pages physiques ; et
l'envoi, par le dispositif primaire, de la deuxième commande au dispositif de stockage lorsque le dispositif primaire détermine que la quantité d'entrées mises à jour dans la première adresse de bloc logique à la table de mappage de numéros de pages physiques est supérieure à un premier seuil prédéfini.

6. Procédé selon l'une quelconque des revendications 3 à 5, dans lequel la réception, par le dispositif primaire, des premières informations à partir du dispositif de stockage comprend :
la réception, par le dispositif primaire, des premières informations transportées dans des informations réinjectées par le dispositif de stockage en réponse à une troisième commande, la troisième commande étant utilisée pour réaliser une opération de lecture/écriture sur le dispositif de stockage.

7. Procédé de synchronisation d'une adresse de bloc logique à une table de mappage de numéros de pages physiques, comprenant :
l'envoi, par un dispositif de stockage, d'un premier indice d'entrée à un dispositif primaire, le premier indice d'entrée étant un indice correspondant à une entrée mise à jour dans une première adresse de bloc logique à une table de mappage de numéros de pages physiques stockée localement dans le dispositif de stockage ;
dans lequel
l'envoi, par le dispositif de stockage, du premier indice d'entrée au dispositif primaire comprend :
la réception, par le dispositif de stockage, d'une deuxième commande à partir du dispositif primaire, la deuxième commande indiquant au dispositif de stockage de réinjecter le premier indice d'entrée ; et
la réinjection, par le dispositif de stockage, du premier indice d'entrée au dispositif de stockage en réponse à la deuxième commande ; et le procédé comprenant en outre :
la réception (304), par le dispositif de stockage, d'une première commande à partir du dispositif primaire, la première commande demandant au dispositif de stockage d'envoyer une première entrée correspondant à un deuxième indice d'entrée déterminé de manière sélective par le dispositif primaire à partir du premier indice d'entrée sur la base d'une quantité de temps d'accès des données dans l'entrée correspondant à chaque indice dans le premier indice d'entrée, le deuxième indice d'entrée faisant partie des indices dans le premier indice d'entrée ; et
la réinjection (305), par le dispositif de stockage, de la première entrée au dispositif primaire en réponse à la première commande, de sorte que le dispositif primaire mette à jour, sur la base de la première entrée, une deuxième adresse de bloc logique à une table de mappage de numéros de pages physiques stockée localement dans le dispositif primaire.

8. Procédé selon la revendication 7, le procédé comprenant en outre :
l'envoi, par le dispositif de stockage, de premières informations au dispositif primaire, les premières informations indiquant qu'il y a une mise à jour dans la première adresse de bloc logique à la table de mappage de numéros de pages physiques.

9. Procédé selon la revendication 7, le procédé comprenant en outre :
l'envoi, par le dispositif de stockage, de premières informations au dispositif primaire, les premières informations transportant des informations d'indication, et les informations d'indication indiquant qu'une quantité d'entrées mises à jour dans la première adresse de bloc logique à la table de mappage de numéros de pages physiques est supérieure à un premier seuil.

10. Procédé selon la revendication 7, le procédé comprenant en outre :
l'envoi, par le dispositif de stockage, de premières informations au dispositif primaire, les premières informations transportant une quantité d'entrées mises à jour dans la première adresse de bloc logique à une table de mappage de numéros de pages physiques.

11. Système de communication, le système de communication comprenant un dispositif primaire et un dispositif de stockage ;
le dispositif primaire est configuré pour réaliser le procédé selon l'une quelconque des revendications 1 à 6 ; et
le dispositif de stockage est configuré pour réaliser le procédé selon l'une quelconque des revendications 7 à 10.
